# EUROPEAN PATENT APPLICATION

(11) **EP 3 070 468 A1**
(43) Date of publication of application: **21.09.2016**
(21) Application number: 16160176.0
(22) Date of filing: 14.03.2016
(51) Int. Cl.: G01N 29/24, B06B 1/06, H01L 41/053, H04R 17/00

(54) **ULTRASONIC TRANSMITTER**

(30) Priority: 19.03.2015 IT MO20150062
(71) Applicant: IMAL S.r.l, 41010 San Damaso (MO) (IT)
(72) Inventor: BENEDETTI, Paolo, 41126 MODENA (IT)
(74) Representative: Gagliardelli, Fabrizio

(57) **Abstract**

An ultrasonic transmitter (1, 100) comprising a shaped transmission head (2) and piezoelectric means (3) arranged for contacting said shaped head (2).

The head (2) is movable within the transmitter (1), which comprises biasing means (4, 5, 50) suitable for urging the head (2) and the piezoelectric means (3) so as to maintain their mutual contact during repeated dimensional changes of the piezoelectric means (3).

## Description

The present invention relates to an ultrasonic transmitter, especially but not solely intended to detect a lack of homogeneity in wood products, such as, for example panels made by pressing incoherent materials of a ligneous nature.

The practice of performing a check for the lack of homogeneity on wood panels or layers while, after forming, they are made to pass along a processing line is well known.

This check is performed by means of an apparatus that essentially comprises a plurality of devices for emitting (or transmitting) sound waves, in particular of an ultrasonic frequency, which operate on one side of the panel in transit, and a plurality of receiving devices operating on the opposite side of the same panel at a pre-established distance from the emitters.

Though experience has proven the effectiveness of this type of solution, a need has arisen to have a transmitter that enables a better resolution in checking for defects in the above-mentioned products and which is at the same time of a simple and economical conception and construction. Ultrasonic transmitters configured for the transmission of sound waves in water, for example for maritime navigation purposes, are also known.

This type of transmitter does not work effectively in transmission through air and, in particular, it is subject to a drawback explained below.

These transmitters comprise piezoelectric elements sandwiched between a transmission head, comprised in the so-called "front mass", and a "back mass" or "backing", as is said in the technical jargon.

It is known that piezoelectric elements are subject to a periodic volumetric change, when adequately urged by a variable voltage.

In the known transmitters, when the piezoelectric element expands and strikes against the transmission head, it transmits mechanical energy to the latter.

In the known solution, a screw is used to connect the front mass and backing and it is tightened by means of a nut to define a device in which the transmission head is maintained fixed relative to the backing.

However, the constant compression between front mass and backing greatly reduces the freedom of movement of the piezoelectric elements, which constitutes a limit to the power delivered and, in practice, limits the effectiveness of using the known transmitters.

In particular, the known solution cannot be usefully employed in transmission through air, for example for the purpose of detecting a lack of homogeneity in wood panels.

In this context, the technical task at the basis of the present invention is to provide an ultrasonic transmitter that satisfies the need presented above and overcomes the limits of the prior art.

The stated technical task is achieved by the ultrasonic transmitter constructed in accordance with claim 1.

Additional features and advantages of the present invention will become more apparent from the approximate, and thus non-limiting, description of a preferred but not exclusive embodiment of an ultrasonic transmitter, as illustrated in the accompanying drawings, in which:
- figure 1 is a schematic longitudinal section view of a first embodiment of the transmitter of the invention; and
- figure 2 is a schematic longitudinal section view of a second embodiment of the transmitter.

With reference to the appended figures, 1 and 100 denote in its entirety the ultrasonic transmitter according to the invention, in the two embodiments thereof presented here.

The proposed transmitter 1, 100 comprises a shaped transmission head 2, preferably made of aluminium, intended to transmit ultrasound in a predefined direction D in space.

In detail, the invention comprises a "front mass" 2, 10, 11 which includes the shaped head 2.

Moreover, the transmitter 1, 100 of the invention includes piezoelectric means 3, arranged so as to contact the shaped head 2 and transmit vibrations thereto upon the urging of an electrical control.

The invention further comprises an electroacoustic transducer, of the type capable of transforming the electrical energy provided by a specific source into mechanical energy, thanks to the oscillation of the elastic solids comprised in the piezoelectric means 3.

Applications in which the invention is used both to generate and receive ultrasound are not ruled out in principle, though hereinafter reference will be made to the case in which the proposed transmitter 1, 100 is intended for transmission only, whilst a specific receiver is provided for reception.

As will be better clarified below, the transmitter 1, 100 of the invention is specially intended to propagate ultrasound through air, preferably in order to detect a lack of homogeneity inside the aforesaid wood panels, which can be due to air bubbles, splits or cracks.

The aforesaid piezoelectric means 3 can comprise a plurality of piezoelectric elements 30, for example interspersed with metal electrodes 31, connected to the aforementioned electrical source.

The piezoelectric elements 30 can for example be of a ceramic or different type provided that they are suited to the purpose.

In the illustrated example, the piezoelectric elements 30 have an annular, preferably cylindrical shape; in this case, the electrodes 31 are layers in the shape of a circular crown.

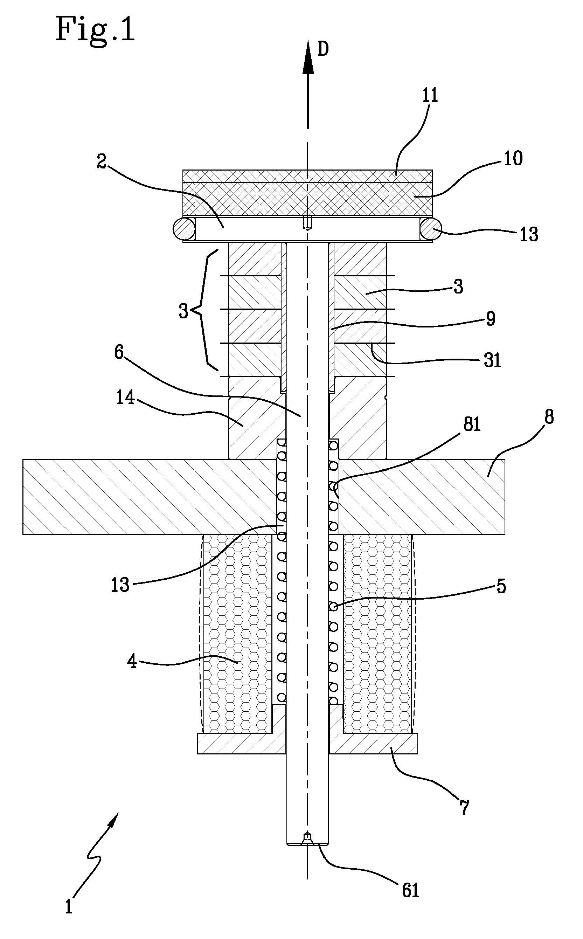

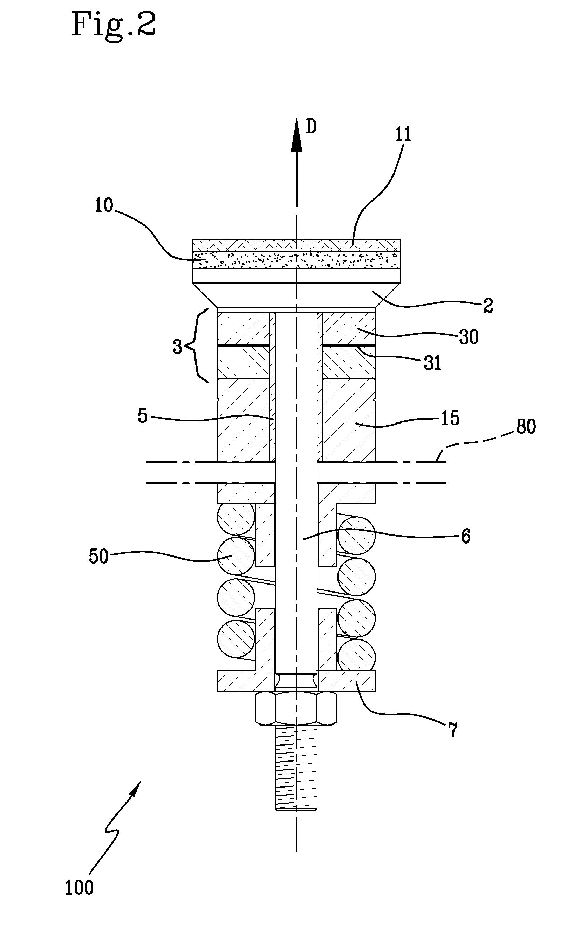

The head 2 can be plate-like, as shown in figure 1, or else it can have an outwardly widened, i.e. thickened, shape; for example, the head 2 can have a truncated cone or similar shape, like in the example in figure 2.

According to an important aspect of the invention, the head 2 is movable within the transmitter 1, 100, which comprises biasing means 4, 5, 50 suitable for urging the head 2 and piezoelectric means 3 so as to maintain their mutual contact during repeated dimensional changes of the piezoelectric means 3.

Thanks to this solution, the drawbacks of the prior art are overcome.

In fact, on the one hand, one avoids any interruption in the continuity, or contiguity, between the piezoelectric means and transmission head and thus an excellent impedance matching is obtained; simultaneously, ample freedom of movement is allowed to the piezoelectric means 3, thus enabling high-power transmission with a high output.

These aspects will be further addressed in the explanation of how the invention works.

Some possible implementations of the inventive concept are described below.

First of all, the biasing means 4, 5, 50 is preferably connected, also indirectly, to the transmission head 2 and are suitable for urging the latter so as to maintain the contiguity with the piezoelectric means 3 which, it is noted, is mounted in the transmitter 1, 100 in contact with the head 2 itself.

Preferably, as can be seen in the appended figure, the head 2 is fixed, or in any case solidly constrained, to a handling element 6, which is associated with the biasing means 4, 5, 50 and is movable relative to the piezoelectric means 3.

In detail, the handling element can comprise a sliding rod 6, for example one that is coaxial with the head 2 and substantially rigid, or in any case a substantially non-deformable elongated member, which can be joined to the head 2 on the inner side thereof, i.e. the one facing the piezoelectric means 3.

As noted above, the piezoelectric means 3 can substantially consist of a sort of pile of piezoelectric elements 30 and electrodes 31 having an annular shape, or in any case provided with a cavity which slidingly houses the handling element 6.

Preferably, the handling element 6 fits over a tube 9 made of insulating material, which is interposed between the piezoelectric means 3 and the handling element 6 itself.

In a particular version of the invention, the transmission head 2 conforms the handling element 6, which thus originates from the inner side of the head 2 and extends axially toward the inside of the transmitter 1, 100 as far as a distal end 61, opposite the head 2 itself.

Preferably, an abutment element 7 is provided, which is solidly coupled to the handling element 6.

In particular, the abutment element, which can be an annular shoulder 7 mounted on the handling element 6, is located in an end portion thereof which includes the aforesaid distal end 61.

The invention can be provided with a support 8, 80, for example of a planar type, positioned transversally to the axis of the transmitter 1, 100.

It should also be noted that a metal bushing 14, 15 can be placed between the piezoelectric means 3 and the support 8, 80 and, together with the planar support 8, 80, it contributes to defining a rear part of the transmitter 1, 100, relative to the front mass.

In practical terms, in the preferred embodiment of the invention, the biasing means 4, 5 is interposed between the aforementioned shoulder 7 (or another abutment element), and the support 8, 80, which can comprise a passage 81 for axial sliding of the aforesaid rod 6 (or other handling element).

Whenever, following an electrical urging, the piezoelectric means 3 undergo an expansion that transfers mechanical energy to the head 2 and the shoulder 7 is drawn by the sliding rod 6, in such a way as to press on the biasing means 4, 5.

When the piezoelectric means 3 retracts, the biasing means 4, 5, 50 pushes the shoulder 7, which, via the rod 6, draws the transmission head 2 towards the inside of the transmitter 1, so as to maintain physical continuity, i.e. contact, between the head 2 and piezoelectric means 3.

Therefore, during the operation of the transmitter 1, 100 the piezoelectric means 3 undergoes a periodic change in shape and the head 2 is subjected to a "pursuit" movement, so as to maintain the possible impedance matching always constant.

Advantageously, the head 2 of the invention has a behaviour contrary to that of the prior art.

In fact, whilst the head of the prior art transmitter is fixed relative to the associated backing, the head 2 of the proposed transmitter 1, 100 vibrates in concert with the piezoelectric means 3, like a loudspeaker, so as to assure a transmission through air that is not only perfectly effective, but also efficient in terms of the power used.

The biasing means 4, 5, 50 can comprise a central through hole to receive the aforementioned rod 6.

In the first embodiment of the invention, illustrated in figure 1, the biasing means 4, 5 can include one or more elastic elements 4 made up of elastomeric material, sandwiched between the shoulder 7 and the support 8 and/or a spring 5, for example of the spiral type, located in an internal cavity 13 of the transmitter 1, in which the rod 6 slides.

Preferably, the biasing means 4, 5 is equipped both with the elastomeric elements and the spring 5.

The latter can be positioned within the elastomeric elements and extend between said metal bushing 14, in which the internal cavity 13 is at least partly fashioned, and the shoulder 7.

In the second embodiment, the biasing means can comprise an external spring 5, as in the example in figure 2, or can be constructed as in the first embodiment.

In the first embodiment of the invention, as said, a rear part of the transmitter 1 comprises both the above-mentioned support 8 and the bushing 14 (figure 1).

The configuration of the rear part 8, 14 was conceived so as to produce a band increase in the transmitter 1 via the absorption of the reflected power that is inevitably produced during transmission.

Preferably, the support 8 consists of a flat layer made up of sound absorbing material and the bushing 14 is made up of a material with an impedance that is intermediate between the piezoelectric means 3 and the support 8 itself.

In this manner, the bushing 14 produces an impedance matching for the reflected power that can then be absorbed by the support.

From the viewpoint of the geometry of the proposed transmitter 1, the flat sound absorbing layer 8 also constitutes a fixed reference in relation to the movements of the components of the transmitter 1.

It should be noted that the proposed solution can also be configured as an ultrasonic transmission system comprising a number of transmitters 1 equipped with a same common flat supporting layer 8.

In this case, the coupling between the support 8 and bushings 14 also serves to prevent the different transmitters 1 from interfering with one another, since the reflected waves, which could be propagated around a single transmitter, are advantageously absorbed.

In the second embodiment, the rear part of the transmitter 100 likewise comprises a metal bushing 15, located in contact with the piezoelectric means 3.

In this case, however, the bushing 15 is made up of a heavy material, such as, for example, steel or tungsten, which has the function of reflecting, toward the head 2, the power that in turn is reflected away from the head due to the small but inevitable impedance mismatch between the piezoelectric means 3 and the head 2 itself.

As said, the invention has been conceived above all for transmission through air; therefore, the aforesaid front mass preferably also includes comprising adapter means 10, 11 arranged in contact with the head 2 and suitable for enabling matching of acoustic impedance between the piezoelectric means 3 and air.

In detail, the adapter means 10, 11 is located on the outermost side of the transmission head 2, i.e. the side from which it emits ultrasound.

The adapter means can comprise at least a layer of cellular PVC 10, preferably in contact with the head 2, and can comprise a layer of polyethylene foam 11, in contact with the PVC layer.

In practical terms, the invention can comprise a front mass 2, 10, 11 consisting of at least three layers, one of which made up of aluminium (the head 2), a layer 10 of PVC or in any case a material with a density of less than 500 kg/m³ and a layer 11 of polyethylene or in any case a material having a density of less than 80 kg/m³. Both of the layers 10, 11 can have a discoid shape.

An O-ring 12 or another similar seal can be mounted on the perimeter or circumference of the transmission head 2 (see figure 1).

Preferably, the transmitter 1, 100, except for the aforementioned support 8, 80, has an elongated development, in which various components are located in axial succession to define different transverse sectors of the invention.

In detail, the transmitter 1 is defined between two opposite ends, between which the following are arranged in sequence: the adapter means 10, 11, transmission head 2, piezoelectric means 3, metal bushing 14, 15, support 8, 80, biasing means 4, 5 and abutment element 7.

In order to ensure a more efficient use in detecting a lack of homogeneity within the panel, the head 2 and the layers 10, 11 of the adapter means preferably has an outer diameter comprised between 55 and 65 mm and, more preferably, substantially equal to 60 mm.

Moreover, the aforementioned layer of polyethylene foam 11 can have a thickness comprised between 2 and 4 mm or, preferably, substantially equal to 3 mm.

In addition, the layer of PVC 10 can have a thickness comprised between 7 and 9 mm or, preferably, substantially equal to 8 mm.

Finally, the piezoelectric means 3 can comprise between two and four annular piezoelectric elements 30, each preferably having an outer diameter comprised between 37 and 39 mm and, even more preferably, substantially equal to 38 mm; the thickness of each piezoelectric element can be between the 7 and the 9 mm and, preferably, substantially equal to 8 mm.

## Claims

1. An ultrasonic transmitter (1, 100) comprising a shaped transmission head (2) and piezoelectric means (3) arranged for contacting said shaped transmission head (2), **characterized in that** said head (2) is movable within the transmitter (1), said transmitter comprising biasing means (4, 5, 50) suitable for urging the head (2) and said piezoelectric means (3), so as to maintain their mutual contact during repeated dimensional changes of the piezoelectric means (3).

2. A transmitter (1, 100) according to the preceding claim, wherein said biasing means (4, 5) is connected to the head (2).

3. A transmitter (1, 100) according to the preceding claim, comprising a handling element (6) solidly constrained to the head (2) and associated with said biasing means (4, 5), said handling element being movable relative to the piezoelectric means (3).

4. A transmitter (1, 100) according to the preceding claim, wherein the piezoelectric means (3) is provided with a cavity which slidingly houses said handling element (6).

5. A transmitter (1) according to at least any preceding claim, wherein said biasing means (4, 5) comprises at least one elastic element (4) made up of elastomeric material.

6. A transmitter (1, 100) according to at least any preceding claim, wherein said biasing means (4, 5, 50) comprises at least one spring (5, 50).

7. A transmitter (1, 100) according to at least one of claims 3 - 6, comprising an abutment element (7) integrally coupled to said handling element (6), the biasing means (4, 5, 50) being adapted to act on said abutment element (7).

8. A transmitter (1) according to at least any preceding claim, comprising a support (8) suitable for supporting the rest of the transmitter (1), said support (8) being made up of sound absorbing material.

9. A transmitter (1) according to the preceding claim, comprising a bushing (14) able to allow an impedance matching with the sound absorbing support (8).

10. A transmitter (100) according to at least any preceding claim, comprising a bushing (15) arranged in contact with the piezoelectric means (3) and able to reflect ultrasound.

11. A transmitter (1, 100) according to at least any preceding claim comprising adapter means (10, 11) arranged in contact with the head (2) and suitable for enabling matching of acoustic impedance between the head (2) and air.

12. A transmitter (1, 100) according to the preceding claim, wherein said adapter means (10, 11) comprises at least one layer of cellular PVC (10).

13. A transmitter (1, 100) according to claim 11 or 12, wherein said adapter means (10, 11) comprises at least one layer of polyethylene (11).

14. A transmitter (1, 100) according to claims 7, 8 and 9, having a substantially elongated development being defined between two opposite ends, between which the following are arranged in sequence: adapter means (10, 11), transmission head (2), piezoelectric means (3), a support (8, 80), biasing means (4, 5, 50) and said abutment element (7).

15. An ultrasound system comprising several transmitters (1, 100) according to at least one of claims 8 to 14, said transmitters (1) being equipped with a single common support (8).
